Europäisches Patentamt

European Patent Office

Office européen des brevets

(11) Veröffentlichungsnummer: **0 212 180 B1**

(12) **EUROPÄISCHE PATENTSCHRIFT**

(45) Veröffentlichungstag der Patentschrift: **02.09.92**

(21) Anmeldenummer: **86109163.5**

(22) Anmeldetag: **04.07.86**

(51) Int. Cl.⁵: **H01M 6/08**

(54) **Galvanisches Primärelement.**

(30) Priorität: **20.08.85 DE 3529723**

(43) Veröffentlichungstag der Anmeldung:
**04.03.87 Patentblatt 87/10**

(45) Bekanntmachung des Hinweises auf die
Patenterteilung:
**02.09.92 Patentblatt 92/36**

(84) Benannte Vertragsstaaten:
**AT BE CH DE FR GB IT LI NL SE**

(56) Entgegenhaltungen:
**DE-B- 1 201 436    DE-B- 2 043 891**
**FR-A- 1 542 442    FR-A- 2 089 486**
**FR-A- 2 251 109    US-A- 3 069 485**

(73) Patentinhaber: **VARTA Batterie Aktiengesellschaft
Am Leineufer 51
W-3000 Hannover 21(DE)**

(72) Erfinder: **Costenoble, Ullrich, Dipl.-Ing.
Strutrainstrasse 19
W-7095 Rainau(DE)**
Erfinder: **Hennrich, Rolf
Frankenstrasse 20
W-7090 Ellwangen(DE)**

(74) Vertreter: **Kaiser, Dieter Ralf, Dipl.-Ing.
Gundelhardtstrasse 72
W-6233 Kelkheim/Ts.(DE)**

EP 0 212 180 B1

## Beschreibung

Die Erfindung betrifft ein galvanisches Primärelement mit verdicktem alkalischen Elektrolyten, welches in einem becherförmigen Metallgehäuse in konzentrischer Anordnung eine innere negative Elektrode aus gepastetem Zinkpuler und eine äußere positive Braunstein- oder Silberoxidelektrode in Form eines Ringzylinders mit zwischenliegendem Separator, sowie eine zentrisch im Gehäuse angeordnete Hülse eines Verdrängungskörpers, die an dem gepasteten Zinkpulver anliegt, enthält.

Bei der Montage einer solchen alkalischen Rundzelle werden in das zylinderförmige Blechgehäuse zunächst ringförmige Preßlinge, aus einem Braunstein/Graphit-Gemisch oder Silberoxid bestehend, als Stapel eingebracht und zu einer röhrenförmigen Kathode verpreßt. In diese Röhre wird in Form einer Hülse oder überlappenden Lagen der Separator in dünnen Vliesschichten oder Folien anliegend eingepaßt. Der verbliebene Innenraum wird als Anode mit einem Gemisch aus Zinkpulver, Verdicker und Elektrolyt, vorzugsweise Kalilauge, teilweise oder ganz aufgefüllt. Als Ableiter für diese Anode dient vorzugsweise ein an die Verschlußkappe angeschweißter Nagel aus Messing oder Kupfer, der zentrisch in dem Zinkpulvergemisch steckt. Die Verschlußkappe wird gegen das Blechgehäuse durch ein ringförmiges Kunststoffteil, welches zugleich als Abdichtung dient, abisoliert. Bei der Dosierung des Zinkpulvers in angeteigter Form ist eine allseitig flächige und gleichmäßige Verteilung an der Separatorinnenseite nicht gewährleistet, wenn wässrige Lauge getrennt dazu eindosiert wird, die dann seitlich oder darüber stehen kann. Aber auch wenn das Zinkpulver vorher mit Lauge und Verdicker zu einer Paste verrührt worden war, stellt sich keine innige Vermischung mit der wässrigen Lauge in der Zelle ein. Das Zinkpulver bleibt beweglich und bei Erschütterungen der Zelle können sich die elektrischen Zustands- und Entladewerte erheblich verändern.

Besonders nachteilig macht sich diese mangelnde Homogenität der Zinkpaste bei hohen Arbeitstemperaturen bemerkbar, für die beispielsweise ein Primärelement gemäß DE-A- 33 37 570 speziell eingerichtet ist. Es hat sich wegen der Berstgefahr solcher Zellen infolge stark ansteigenden Binnendrucks als ratsam erwiesen, den Anodenraum nur zu etwa 2/3 zu füllen, um so dem anfallenden Gas noch einen Sammelraum von einigen cm$^3$, je nach Größe der Zelle, verfügbar zu machen, wobei man für eine Zelle des Typs "Baby" eine H$_2$ -Entwicklung von ca. 1 cm$^3$/h bei 163 ° C in Rechnung setzen kann.

Gegenüber herkömmlichen alkalischen Rundzellen, die im Anodenraum weitgehend aufgefüllt sind, ist die hier getroffene reduzierte Einwaage daher noch weniger fixiert und es kommt bei Entladungen unter hoher Temperaturbelastung zu teilweise starken Einbrüchen der Entladekurve. Die Anodenraumfüllung neigt zu einer horizontalen Schichtung, bei welcher das Zink als der schwerste Bestandteil im wesentlichen das unterste Drittel des Anodenraumes einnimmt. Das mittlere Drittel füllt der wässrige Elektrolyt aus und darüber befindet sich das letzte Drittel als Hohlraum.

Um hier Abhilfe zu schaffen, wurde, wie aus der DE-B- 1 201 436 bereits bekannt, durch Zentrifugieren der Rundzelle versucht, eine Umschichtung des Zinks im Sinne einer gleichmäßigen Verteilung gegenüber der Kathodenoberfläche zu erzielen. Dies führte bei der vorliegenden Zellenkonstruktion nicht zum gewünschten Erfolg, weil der Messingnagel als Minusableiter den Zinkkontakt verliert. Zudem ist die Zinkschicht instabil und fällt bei Erschütterungen wieder zusammen.

Der Erfindung liegt daher die Aufgabe zugrunde, ein Primärelement nach dem eingangs formulierten Gattungsbegriff verfügbar zu machen, bei welchem Kontaktstörungen infolge Zerfalls bzw. Entmischung des Zink-Elektrolytgels weitgehend ausgeschlossen sind.

Die Aufgabe wird erfindungsgemäß durch die Merkmale des Anspruchs 1 gelöst.

Die möglichen Formen eines Verdrängungskörpers gemäß der Erfindung sind mannigfaltig. Er kann runde, z.B. kugelige, birnenförmige oder ovale Gestalt besitzen oder auch prismatisch, mit dreieckigem, viereckigem usw. Querschnitt ausgebildet sein. Es muß nur die Verdrängungsfunktion erfüllt werden. Bei Rundzellen ist ein zylinderförmiger Verdrängungskörper, der einen flachen oder vorgeformten Boden besitzen kann, besonders günstig. Im übrigen muß der Verdrängungskörper in seinem Umriß so dimensioniert sein, daß die verdrängte Zinkpaste um ihn herum eine für die Entladung optimale Schicht bildet.

Grundsätzlich sind die Wandungen aller Verdrängungskörper mit runden oder schlitzförmigen Aussparungen versehen, durch welche Elektrolytflüssigkeit fließen kann. Beim Eintauchen des Körpers in die eingewogene Anode weicht der Elektrolyt zuerst in das Innere des Körpers aus, während das pastöse Zink zusammen mit dem Gelierungsmittel durch Verdrängung seitlich hochsteigt. Diese Umgestaltung bewirkt eine enorme Verbesserung der Entladekurve, wie noch gezeigt wird. Allerdings müssen die Aussparungen so geformt und eng dimensioniert sein, daß sie ein Eindringen von Zinkpaste in den Hohlraum, die dort für die Entladung verloren wäre, stark behindern.

Ebenso mannigfaltig wie die Formen des Verdrängungskörpers können die Materialien sein, aus denen er, zweckmäßig durch einen Blas- oder Spritzvorgang, gefertigt wird. Zum Spritzen bieten sich laugebeständige Kunststoffe wie Polyamid, Polyethylen, Polypropylen, Polystyrol u.ä. an. Darüber hinaus haben z.B. Polytetrafluorethylen (PTFE) oder Polyphenylensulfid (PPS) den Vorteil, daß sie zugleich lauge- und hitzebeständig sind. Sehr vorteilhaft für den erfindungsgemäßen Zweck sind auch leitfähige Kunststoffe.

Anstelle von Spritzgußteilen können auch extrudierte Röhrchen mit nachträglicher Lochung die Funktion übernehmen. In diesem Fall muß jedoch nachträglich ein Zieh- oder Stanzteil aus Metall oder Kunststoff als Bodenabschluß hinzugefügt werden.

Grundsätzlich sind alle Bauelemente des Verdrängungskörpers am negativen Elektrodenableiter befestigt.

Anhand dreier Figurendarstellungen soll die Erfindung verdeutlicht werden.

Figur 1 zeigt eine galvanische Primärzelle gemäß der Erfindung im Schnitt.

Figur 2 zeigt einen erfindungsgemäßen Verdrängungskörper aus der Zelle nach Figur 1 im Detail.

Figur 3 zeigt vergleichende Entladekurven.

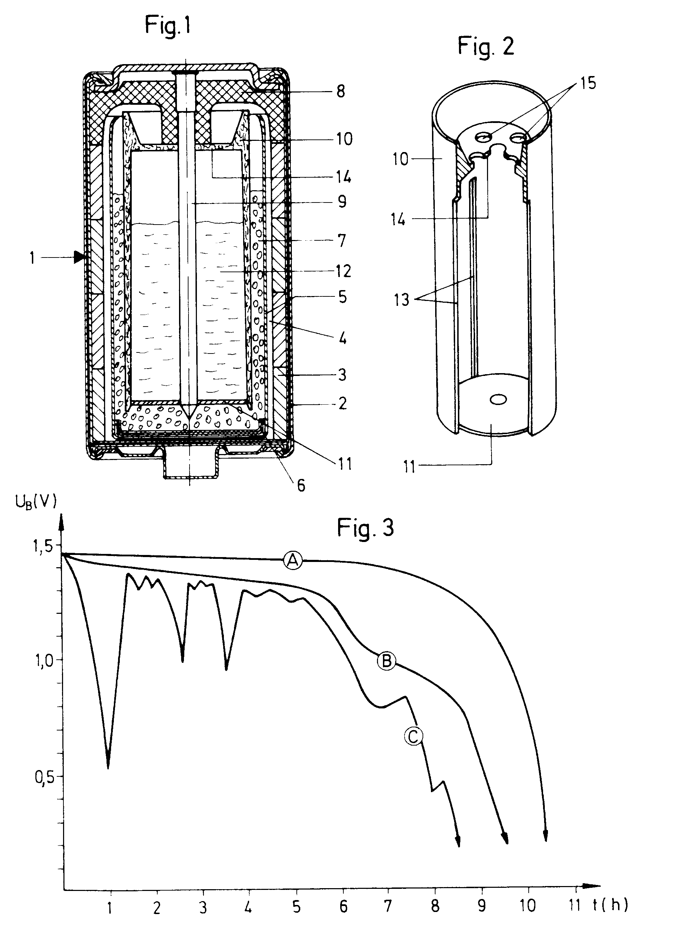

Nach Figur 1 enthält die Primärzelle 1 mit dem isolierten Blechmantel 2 in soweit bekannter Weise eine aus z.B. $MnO_2$- oder $Ag_2O$-Preßlingen zusammengesetzte Kathode 3, eine zweischichtige Separation, bestehend aus einem äußeren Teflongewebe 4 und einer inneren Hülse 5 aus einer Ionenaustauschermembran mit Napfeinlage 6, mit Laugeelektrolyt und einem Verdicker angeteigtes Zink 7 sowie einen Dichtungskörper 8 aus PTFE, durch welchen als negativer Ableiter ein Messingnagel 9 hindurchgeführt ist.

Durch Eintauchen des erfindungsgemäßen Verdrängungskörpers 10, 11 in den Anodenraum, was zugleich mit der Montage des Dichtungskörpers und des Messingnagels geschieht, ist die viskose Anodenmasse bis auf einen am Boden befindlichen Rest zu den Seiten und nach oben gedrückt und die Zinkpaste damit in eine gegenüber dem Kathodenring für die Entladung besonders günstige Schichtkonfiguration gebracht, während der abgesonderte wässrige Elektrolytanteil 12 durch Längsschlitze 13 (vgl. Figur 2) in den Hohlraum des Verdrängungskörpers eingewandert ist. Durch eine auf das Nagelende aufgeschobene Messingscheibe 11 und die Stirnwand 14 des zylindrischen Verdrängungsteils 10 wird dieses an beiden Enden zentriert. Gleichzeitig wird durch die im Zink steckende Fläche der Messingscheibe die Stromableitung verbessert.

Gemäß Figur 2 sind in der Stirnwand 14 des Verdrängungsteils 10 zusätzliche Löcher 15 vorhanden, die dem verdrängten Elektrolytanteil ggfs., etwa bei großer Wärmeausdehnung, einen Ausweg aus dem Hohlraum und einen Wiedereintritt in die Zinkpaste ermöglichen. Dadurch ist die wässrige Elektrolytphase einer für den Entladevorgang günstigen Konvektionsströmung unterworfen. Als Werkstoff für das zylindrische Spritzteil hat sich glasfaserverstärktes Polyvinylidensulfid (Handelsname Ryton R 4) bewährt.

Die vorteilhafte Wirkung der erfindungsgemäßen Maßnahme geht aus den Entladekurven der Figur 3 hervor. Sie geben den Entladeverlauf bei Zellen gleicher Größe vom Typ "Baby" bei 163°C und unter Konstantstrom von 400 mA wieder, wobei Kurve A mit einer erfindungsgemäß eingerichteten Zelle korrespondiert. Kurve B repräsentiert das Verhalten einer Zelle ohne Verdrängungskörper, aber sonst gleicher Konstruktion, unter günstigen Bedingungen. Kurve C illustriert den ungünstigsten Fall, bei dem nämlich die Anodeneinwaage nur 2/3 des Anodenraumes ausfüllt und das Zink dadurch am wenigsten fixiert ist, so daß es zwischenzeitlich zu starken Spannungseinbrüchen kommt.

## Patentansprüche

1. Galvanisches Primärelement mit alkalischem Elektrolyten, welches in einem becherförmigen Metallgehäuse in konzentrischer Anordnung eine innere negative Elektrode aus gepastetem Zinkpulver und eine äußere Braunstein- oder Silberoxidelektrode in Form eines Ringzylinders mit zwischenliegendem Separator enthält und mit einer zentrisch im Gehäuse angeordneten Hülse eines Verdrängungskörpers, die an dem gepasteten Zinkpulver anliegt, dadurch gekennzeichnet, daß der negative Ableiter ein einen Dichtungskörper (8) durchsetzender Metallnagel ist, daß die Hülse (10) des Verdrängungskörpers am Metallnagel (9) befestigt ist und aus laugebeständigem Kunststoff besteht, der das Zinkpulver (7) der Anode schwebend im eingedickten Elektrolyten radial gegen die Separatoroberfläche (4, 5) gedrückt hält, daß die Wandung des Hohlkörpers mit Aussparungen versehen ist, durch welche ein Eindringen von Elektrolyten möglich ist, durch die ein Eindringen von Zinkpaste in den Hohlraum jedoch stark behindert ist, und daß der Anodenraum einen Sammelraum für anfallendes Gas besitzt.

2. Galvanisches Primärelement nach Anspruch 1, dadurch gekennzeichnet, daß der Verdrängungskörper einen flachen oder vorgeformten Boden (11) besitzt.

3. Galvanisches Primärelement nach den Ansprüchen 1 und 2, dadurch gekennzeichnet, daß die Wandung des Verdrängungskörpers runde oder schlitzförmige Aussparungen (13, 15) besitzt.

4. Galvanisches Primärelement nach einem der Ansprüche 1 bis 3, dadurch gekennzeichnet, daß der Verdrängungskörper aus Polyamid, Polyethylen, Polypropylen, Polystyrol, Polytetrafluorethylen oder Polyphenylensulfid besteht.

5. Galvanisches Primärelement nach den Ansprüchen 1 bis 4, dadurch gekennzeichnet, daß der Verdrängungskörper aus leitfähigen Kunststoffen oder aus mit elektrischleitender Beschichtung versehenen Kunststoffen besteht.

## Claims

1. Galvanic primary element which has alkaline electrolyte, which contains, in a cup-shaped metal housing in a concentric arrangement, an inner negative electrode of zinc powder made into a paste and an outer manganese oxide or silver oxide electrode in the form of an annular cylinder with an interposed separator, and which has arranged centrally in the housing a sleeve of a displacement body, this sleeve bearing against the zinc powder made into a paste, characterized in that the negative collector is a metal pin passing through a sealing body (8), in that the sleeve (10) of the displacement body is secured to the metal pin (9) and is of alkali-resistant plastics which holds the zinc powder (7) of the anode, which floats in the thickened electrolyte, pressed radially against the separator surface (4, 5), in that the wall of the hollow body is provided with cutouts through which electrolyte can penetrate, but through which zinc paste is greatly impeded from penetrating, into the hollow space, and in that the anode space has a collection space for evolving gas.

2. Galvanic primary element according to Claim 1, characterized in that the displacement body has a flat or pre-shaped base (11).

3. Galvanic primary element according to Claims 1 and 2, characterized in that the wall of the displacement body has round or slot-shaped cutouts (13, 15).

4. Galvanic primary element according to one of Claims 1 to 3, characterized in that the displacement body is of polyamide, polyethylene, polypropylene, polystyrene, polytetrafluoroethylene or polyphenylenesulphide.

5. Galvanic primary element according to Claims 1 to 4, characterized in that the displacement body is of conductive plastics or of plastics which are provided with an electrically conductive coating.

## Revendications

1. Elément galvanique primaire avec un électrolyte alcalin, qui comprend dans un boîtier métallique en forme de godet, selon une disposition concentrique, une électrode négative interne en poudre de Zinc empâtée et une électrode positive externe en bioxyde de manganèse ou oxyde d'argent sous la forme d'un cylindre annulaire entre lesquelles est placé un séparateur, et avec, disposée centralement dans le boîtier, une douille d'une structure de refoulement qui s'applique sur la poudre de zinc empâtée, élément galvanique primaire caractérisé en ce que la prise négative est une pointe métallique traversant un corps d'étanchéité (8), en ce que la douille (10) de la structure de refoulement, est fixée sur la pointe métallique (9) et est constituée d'une matière plastique résistant à la lessive alcaline, qui maintient pressée radialement contre la surface du séparateur (4, 5) la poudre de zinc (7) de l'anode en suspension dans l'électrolyte épaissie, en ce que la paroi de la structure creuse est munie d'évidements à travers lesquels une pénétration de l'électrolyte est possible, mais à travers lesquels la pénétration de la pâte de zinc dans l'espace creux est efficacement empêchée, et en ce que l'espace anodique comporte un espace collecteur pour le gaz se dégageant.

2. Elément galvanique primaire selon la revendication 1, caractérisé en ce que la structure de refoulement a un fond (11) plat ou bien préformé.

3. Elément galvanique primaire selon les revendications 1 et 2, caractérisé en ce que la paroi de la structure de refoulement, comporte des évidements (13, 15) ronds ou en forme de fentes.

4. Elément galvanique primaire selon une des revendications 1 à 3, caractérisé en ce que la structure de refoulement est en polyamide, polyéthylène, polypropylène, polystyrol, polytétrafluoréthylène ou bien sulfite de polyphénylène.

5. Elément galvanique primaire selon les revendications 1 à 4, caractérisé en ce que la structure de refoulement est constituée par des matières plastiques conductrices ou bien par des matières plastiques munies d'un revêtement électriquement conducteur.

## Fig.1

1

8
10
14
9
7
12
5
4
3
2
11
6

## Fig. 2

15
10
14
13
11

## Fig. 3

$U_B(V)$

1,5

1,0

0,5

A

B

C

1   2   3   4   5   6   7   8   9   10   11   t(h)